# FASCICULE DE BREVET EUROPEEN

(11) **EP 1 155 637 B1**
(45) Date de publication et mention de la délivrance du brevet: **20.09.2006**
(21) Numéro de dépôt: 01401291.8
(22) Date de dépôt: 17.05.2001
(51) Int. Cl.: A46B 3/08, A46B 9/02, A45D 40/26

(54) **Applicateur à âme non torsadée**
Auftragevorrichtung mit unverdrilltem Kern
Applicator with zero-twist core

(30) Priorité: 19.05.2000 FR 0006442
(43) Date de publication de la demande: 21.11.2001
(73) Titulaire: L'ORÉAL, 75008 Paris (FR)
(72) Inventeur: Gueret, Jean-Louis, 75016 Paris (FR)
(74) Mandataire: Tanty, François

(56) Documents cités:
- EP-A- 0 237 360
- FR-A- 726 157
- US-A- 4 403 624
- US-A- 4 804 004
- US-A- 5 086 793

## Description

La présente invention concerne l'application d'un produit sur les fibres kératiniques, notamment les cils ou les sourcils.

L'invention concerne plus particulièrement l'application d'un produit cosmétique ou de soin, par exemple du mascara.

Le mascara est conventionnellement appliqué sur les cils ou les sourcils au moyen d'une brosse comportant des touffes de poils assujetties à un support torsadé.

Le brevet FR 726 157 divulgue une brosse à mascara courbe comportant un support dans lequel sont fixées des touffes de poils.

Il existe un besoin pour disposer d'un nouvel applicateur offrant davantage de possibilités dans la manière de disposer les poils sur le support et dans les effets de maquillage capables d'être obtenus.

La présente invention a pour objet un nouvel applicateur pour l'application d'un produit, notamment sur les cils ou les sourcils, comportant un support et des poils assujettis à ce support pour l'application du produit, caractérisé par le fait que le support est non torsadé et comporte au moins un trou traversant de section transversale non constante dans lequel est maintenue une touffe de poils.

Ledit au moins un trou traversant peut présenter des extrémités débouchant sur des faces extérieures du support.

Le support présente de préférence une forme allongée.

L'invention offre de nouvelles possibilités d'implantation des poils sur le support.

Ainsi, de par le choix de la géométrie donnée à chaque trou et son emplacement sur le support, on peut obtenir des effets de maquillage difficiles sinon impossibles à obtenir aisément au moyen d'une brosse conventionnelle à âme torsadée.

De préférence, le support comporte une pluralité de trous traversants recevant chacun une touffe de poils.

Une touffe de poils correspondant à un trou donné est avantageusement maintenue dans ce dernier par une déformation du trou après insertion des poils, par fluage de la matière du support.

Une telle déformation est obtenue de préférence par matriçage du support, ce matriçage pouvant être effectué à chaud ou à froid.

En variante, la déformation permettant de retenir les poils est obtenue par agrafage, soudure ou bouterolage du support.

On peut ainsi réaliser tout ou partie des trous avec une fraisure à l'une et/ou l'autre de leurs extrémités.

Une telle fraisure permet aux poils de prendre une configuration en éventail à leur sortie du support.

La disposition des trous sur le support est choisie en fonction de l'effet de maquillage recherché, de la nature des poils utilisés et de la géométrie du support.

Les trous traversants peuvent présenter une section transversale circulaire ou non, carrée ou oblongue, en une position de leur longueur.

Les poils d'une touffe peuvent être maintenus dans le trou correspondant du support par des moyens de fixation orientés perpendiculairement à l'axe du trou.

Le support peut comporter au moins un trou borgne associé à un trou traversant et perpendiculaire à ce dernier.

Dans ce cas, les moyens de fixation précités sont avantageusement constitués par un pion inséré dans un tel trou borgne jusqu'à venir en appui contre les poils.

Dans une réalisation particulière, le support comporte au moins une rangée de trous, une telle rangée pouvant comprendre une succession de trous alignés ou non.

Les trous peuvent ainsi être, par exemple, disposés en quinconce sur une face du support.

Le support peut comporter des trous de formes différentes.

Les trous peuvent être disposés sur le support avec un écartement régulier ou non.

Le support peut également comporter des trous communicants, par exemple des trous qui se croisent ou des trous réunis par une partie ajourée du support.

Dans le cas où les trous se croisent, les poils d'une touffe engagée dans l'un des trous peuvent participer au maintien des poils de la touffe engagée dans l'autre trou.

Le support peut comporter des trous non rectilignes.

Le support peut encore comporter des trous d'axes non parallèles, perpendiculaires à la direction longitudinale du support ou faisant un angle aigu non nul avec cette dernière. Le support peut présenter une forme aplatie ou autre, une section transversale polygonale ou autre, constante ou non.

Le support peut ainsi présenter une forme générale conique ou pyramidale.

Le support peut être réalisé avec des dents, rainures ou autres reliefs ou aspérités, afin de pouvoir peigner, lisser les fibres kératiniques ou permettre de constituer des réserves de produit.

En particulier, lesdites rainures ou autres reliefs ou aspérités peuvent être orientés transversalement à l'axe longitudinal du support.

Le support peut être réalisé d'un seul tenant ou présenter une structure composite, par exemple une structure sandwich, ce qui permet de choisir pour constituer le coeur du support un matériau capable d'être matricé relativement facilement, et pour le reste du support, un matériau se prêtant aisément à la réalisation d'une forme prédéterminée pour des raisons par exemple esthétiques ou pour faciliter le montage à l'extrémité de la tige de l'applicateur.

On peut fixer sur le support des poils de toute nature, naturels ou synthétiques, par exemple en élastomère mou, voire un mélange de poils.

Les poils peuvent être creux et/ou présenter des rainures et/ou des plis et/ou des fourches ou des têtes arrondies.

Les poils peuvent être plats.

L'élément d'application peut comporter au moins un trou avec une touffe de poils dépassant de chaque côté du trou avec des hauteurs identiques ou différentes, selon l'applicateur que l'on cherche à réaliser.

Au sein de chaque trou, les poils peuvent présenter des diamètres, natures et/ou sections différentes.

Une touffe peut également comporter des poils de diamètre(s), nature(s) et/ou section(s) différent(s) de celui ou ceux des poils d'une autre touffe.

Tout ou partie des poils peuvent être réalisés dans le même matériau que le support, afin de faciliter par exemple la fixation des poils au support par fusion de matière.

Les poils peuvent être réalisés par extrusion dans une matière molle élastomère.

Les poils peuvent être réalisés dans une matière contenant une charge permettant d'améliorer le glissement au contact des fibres kératiniques, cette charge étant choisie notamment parmi : le graphite, le polytétrafluoroéthylène et ses dérivés, les silicones et leurs dérivés, le bisulfure de molybdène.

Le support peut être réalisé dans un ou plusieurs matériaux choisis dans la liste suivante : polyéthylène, polypropylène, polystyrène, polycarbonate, polyamide, polyacétate, polyuréthane, polyester, élastomères thermoplastiques.

Le support peut être un support non creux.

Le nombre de poils par touffe peut être compris entre 2 et 250, étant de préférence compris entre 4 et 100 et de préférence encore entre 5 et 50.

Tout ou partie des poils peuvent former des boucles d'un côté du trou correspondant ou être rasés.

Les poils peuvent subir un meulage après leur mise en place sur le support, afin de former une brosse ayant un profil déterminé, concave, convexe, en dents de scie ou autre.

L'invention a encore pour objet un dispositif pour le conditionnement et l'application d'un produit sur les fibres kératiniques, notamment les cils ou les sourcils, comprenant un applicateur tel que défini plus haut, un récipient pour contenir une réserve de produit, et un organe d'essorage permettant d'essorer l'applicateur à sa sortie du récipient.

Le support peut être fixé à l'extrémité d'une tige munie à l'autre extrémité d'un organe de préhension pouvant également constituer un capuchon de fermeture du récipient.

La tige précitée peut être réalisée avec des moyens d'étanchéité permettant d'obtenir une fermeture étanche du récipient.

Le support peut être réalisé dans une matière plus souple ou plus rigide que celle utilisée pour fabriquer la tige à laquelle il est fixé.

Le support peut encore être réalisé d'un seul tenant avec la tige de l'applicateur. La tige peut être une tige non creuse.

Le support peut être réalisé en élastomère thermoplastique ou vulcanisé.

L'invention a encore pour objet un procédé de fabrication d'un applicateur pour l'application d'un produit sur les cils ou autres fibres kératiniques, ce procédé comprenant les étapes suivantes :
- réaliser un support non torsadé de forme allongée comportant des trous traversants,
- insérer des touffes de poils dans ces trous traversants,
- déformer les trous du support pour retenir chaque touffe de poils dans le trou correspondant, au moins un trou traversant étant de section transversale non constante.

Avantageusement, les poils sont repliés en U avant d'être insérés dans les trous traversants, ce qui facilite leur introduction.

Les poils forment alors, du côté du trou opposé au côté d'introduction, des boucles que l'on peut laisser sur l'applicateur ou qui peuvent être rasées.

Les poils peuvent ne pas être pliés en leur milieu lorsqu'ils sont mis en place dans les trous du support.

On peut ainsi obtenir si on le souhaite des boucles très courtes d'un côté du support.

Les poils peuvent être tondus pour leur donner une forme d'ensemble donnée.

Les extrémités libres des poils ou les boucles peuvent être meulées.

Les poils peuvent encore être cardés pour les éclater à leurs extrémités.

Le support peut être soudé ou fixé par déformation de matière sur une tige.

Les poils peuvent être coupés à la longueur souhaitée préalablement à leur mise en place sur le support et ne plus être recoupés après celle-ci.

Le support peut être déformé par matriçage sur un ou deux côtés, afin de déformer les trous sur un ou deux côtés, en fonction du résultat recherché, la déformation des trous sur un côté seulement pouvant amener les poils à prendre une orientation différente de celle prise lorsque les trous sont déformés des deux côtés.

L'invention a encore pour objet un procédé de fabrication d'un applicateur pour l'application d'un produit sur les cils ou les autres fibres kératiniques, ce procédé comprenant les étapes suivantes :
- réaliser un support non torsadé comprenant des trous traversants et des trous secondaires ayant un axe de préférence sensiblement perpendiculaire à l'axe desdits trous traversants,
- insérer des touffes de poils dans ces trous traversants,
- insérer des pions dans lesdits trous secondaires de manière à retenir chaque touffe de poils dans le trou traversant correspondant, au moins un trou traversant étant de section transversale non constante.

L'invention permet grâce à la facilité de mise en place des poils sur le support de réaliser à partir d'un faible nombre de supports différents très rapidement un grand nombre de brosses ou de peignes recevant des touffes comprenant des poils de natures et/ou diamètres et/ou longueurs différents, ainsi qu'un nombre plus ou moins grand de poils par touffe.

On dispose donc d'une flexibilité accrue dans la fabrication des applicateurs.

D'autres caractéristiques et avantages de la présente invention ressortiront à la lecture de la description détaillée qui va suivre, d'exemples de réalisation non limitatifs, et à l'examen du dessin annexé, sur lequel :
- la figure 1 est une vue schématique en coupe axiale d'un dispositif de conditionnement et d'application conforme à un exemple de mise en oeuvre de l'invention,
- la figure 2 est une vue schématique et partielle, en coupe axiale, représentant des trous contenant des touffes de poils,
- la figure 3 illustre la mise en place d'une touffe de poils dans un trou correspondant,
- la figure 4 illustre une variante de mise en place d'une touffe dans un trou correspondant,
- la figure 5 représente une touffe de poils après rasage des boucles,
- la figure 6 illustre le matriçage du support après introduction des touffes de poils,
- la figure 7 est une coupe transversale schématique du support après matriçage sur un côté,
- la figure 8 est une vue analogue à la figure 7, après matriçage du support sur deux côtés opposés,
- les figures 9 et 10 illustrent l'influence de la géométrie du trou sur la disposition des poils hors du support,
- la figure 11 représente en coupe transversale un support pourvu d'un trou borgne permettant l'insertion d'un pion de blocage d'une touffe de poils,
- la figure 12 est une vue schématique et partielle en perspective d'un support pourvu de rainures latérales,
- la figure 13 représente de manière partielle et schématique un support comprenant des touffes de poils avec des orientations opposées,
- les figures 14 à 19 illustrent différentes configurations de brosses,
- les figures 20 et 21 illustrent différentes dispositions de trous sur le support,
- la figure 22 représente des trous d'inclinaisons différentes,
- la figure 23 représente de manière schématique un support de section transversale polygonale, pourvu de touffes de poils se croisant,
- les figures 24 et 25 représentent de manière schématique des brosses ayant un support de section carrée,
- la figure 26 représente un trou non rectiligne,
- les figures 27 et 28 représentent partiellement et schématiquement des supports courbes,
- la figure 29 est une coupe transversale, partielle et schématique, représentant un support composite,
- la figure 30 représente un support à trous communicants,
- la figure 31 illustre de manière schématique la réalisation d'un rétreint sur la tige de l'applicateur,
- la figure 32 représente l'extrémité d'un poil après cardage, et
- la figure 33 représente l'extrémité d'un poil avec rainure.

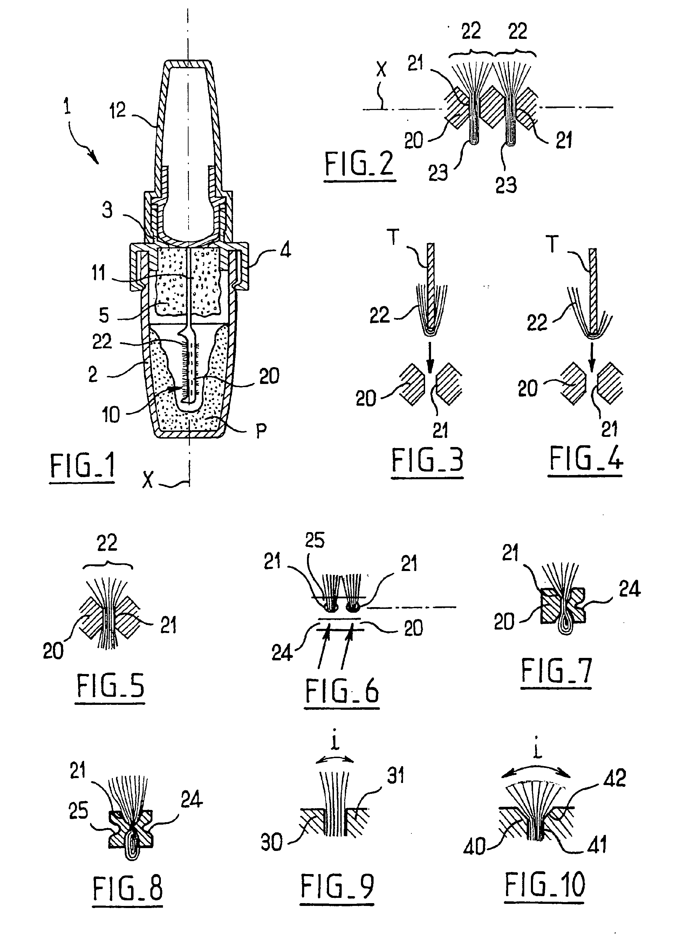

On a représenté sur la figure 1 un dispositif 1 de conditionnement et d'application conforme à un exemple de mise en oeuvre de l'invention.

Ce dispositif 1 comporte un récipient 2 contenant un produit P cosmétique ou de soin, par exemple du mascara, destiné à être appliqué sur les cils ou les sourcils.

Le récipient 2 est pourvu en partie supérieure d'un col 3 solidaire d'une jupe de montage 4 encliquetée sur le corps du récipient 2.

Le dispositif 1 comporte un applicateur 10, présent à l'extrémité d'une tige 11 d'axe X reliée à un organe de préhension 12 constituant également un capuchon de fermeture du récipient 2.

Un organe d'essorage 5 est prévu dans le corps du récipient 2 pour essorer l'applicateur 10 à sa sortie de celui-ci.

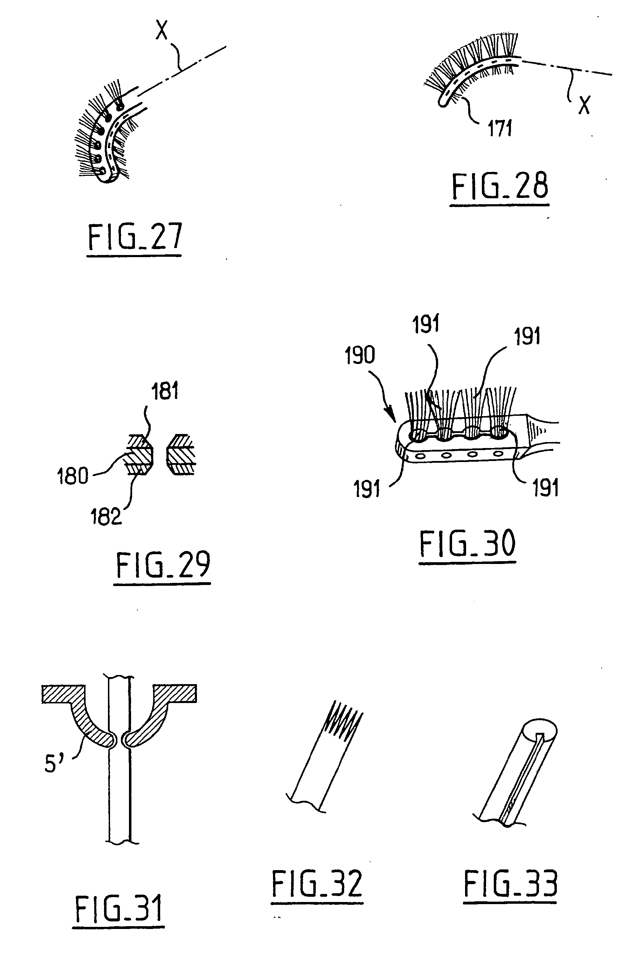

Cet organe d'essorage 5 est ici un bloc de mousse à cellules ouvertes mais pourrait être quelconque, par exemple à lèvre 5' en élastomère, floquée ou non, comme illustré sur la figure 31.

Dans ce cas, la tige comporte avantageusement un rétreint permettant lorsque l'applicateur est en place sur le récipient de ne pas déformer l'organe d'essorage.

L'applicateur 10 comporte un support 20 de forme allongée dans la direction de l'axe X, traversé, comme on peut le voir sur la figure 2, dans une direction perpendiculaire à l'axe X, par des trous débouchants 21, recevant chacun une touffe de poils 22.

Le support pourrait avoir d'autres orientations, par exemple être perpendiculaire à l'axe X.

Les axes des trous 21 sont sensiblement perpendiculaires à l'axe longitudinal du support.

Les poils 22 d'une touffe sont introduits dans le trou 21 correspondant au moyen d'un outil d'insertion T, comme illustré sur la figure 3.

Pour faciliter leur insertion, les poils 22 de la touffe en question sont repliés en U à mi-longueur et l'outil T prend appui dans le fond du U pour pousser les poils 22 à travers le trou 21.

L'outil T est ensuite retiré, laissant les poils 22 en place dans le trou 21, ces derniers formant du côté opposé au côté d'introduction des boucles 23, lesquelles peuvent ensuite être rasées éventuellement, comme illustré sur la figure 5.

Les poils peuvent également ne pas être repliés exactement à mi-longueur, mais aux trois quarts de leur longueur par exemple, comme illustré sur la figure 4.

Pour assurer la fixation de chaque touffe de poils 22 dans le trou correspondant 21, le support 20 peut être matricé à chaud ou à froid, en fonction de la nature du matériau le constituant.

Pour matricer le support 20, on exerce localement au moyen d'un ou plusieurs poinçons appropriés, non représentés dans un souci de clarté du dessin, une pression sur l'un ou les deux côtés latéraux du support 20, au droit de chaque trou 21, comme illustré par des flèches sur la figure 6.

La pression appliquée sur le support 20 perpendiculairement aux axes des trous a pour résultat de faire fluer la matière d'un côté 24 du support 20, comme illustré sur la figure 7, ou des deux côtés 24 et 25 du support, comme illustré sur la figure 8.

La déformation du support 20 entraîne une réduction de la section de chaque trou 21, de sorte que les poils 22 se trouvent pincés et immobilisés dans celui-ci. La section transversale de chaque trou 21 est non constante suite à la déformation du support 20.

On peut obtenir, en fonction de la géométrie du trou dans lequel est engagée une touffe de poils, des poils qui s'étendent hors du support avec un angle i plus ou moins ouvert, comme illustré sur les figures 9 et 10.

On a représenté sur la figure 9 un support 30 pourvu d'un trou 31 cylindrique de révolution dans le voisinage d'au moins l'une de ses extrémités.

On remarquera sur cette figure que les poils restent relativement groupés à l'extérieur du support 30 et forment un faisceau très peu divergent.

On a représenté sur la figure 10 un support 40 pourvu d'un trou 41 débouchant à l'extérieur du support 40 par une fraisure 42.

La présence de cette fraisure 42 permet aux poils de se répartir en éventail à l'extérieur du support 40, avec un angle i supérieur au précédent.

Ainsi, en choisissant la géométrie de chaque trou du support, on pourra obtenir des configurations de poils différentes, en fonction par exemple du maquillage recherché et/ou de la nature du produit à appliquer sur les cils ou les sourcils.

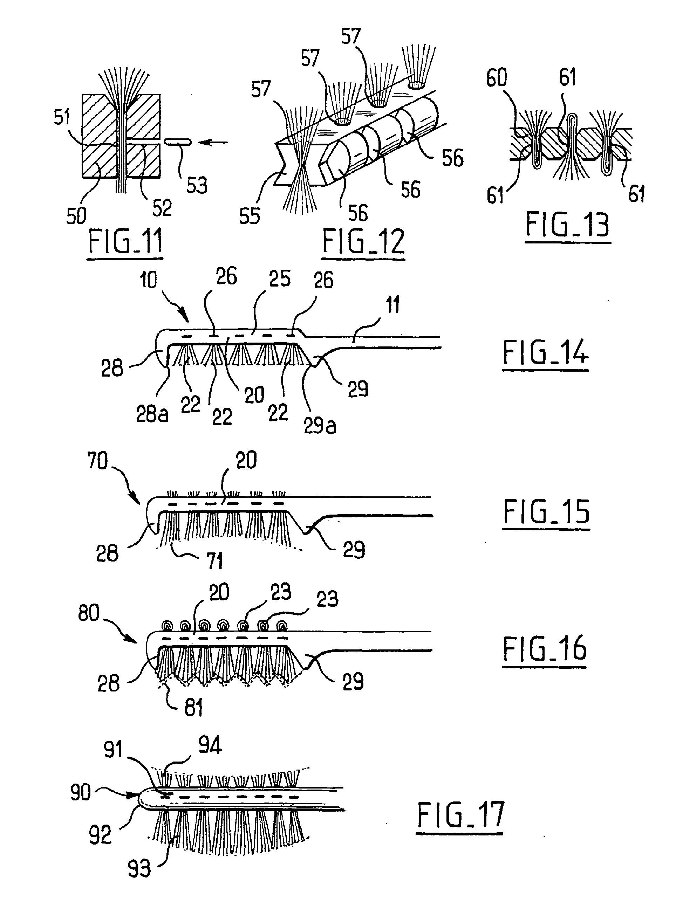

On peut également, pour fixer les touffes de poils sur le support, réaliser des trous borgnes perpendiculaires aux axes des trous recevant les touffes, comme illustré sur la figure 11.

Sur cette figure, on a représenté en coupe transversale, de manière schématique, un support 50 traversé par des trous 51 verticaux destinés à recevoir des touffes de poils.

Des trous borgnes 52 horizontaux sont réalisés sur le support, débouchant à une extrémité dans un trou 51 correspondant.

Un pion 53 est inséré à force dans chaque trou 52 pour bloquer les poils en place dans le trou 51. A cause du trou borgne 52, le trou traversant 51 correspondant n'est pas de section transversale constante. La section transversale du trou traversant 51 est la même dans l'exemple de la figure 11, au dessus et en dessous du trou borgne 52 et elle est différente au niveau du trou borgne 52.

On a représenté sur la figure 12 un support 55 comportant des rainures 56 sur ses faces latérales, afin de constituer des réserves de produit et exercer une action de peignage supplémentaire sur les cils.

Le matriçage du support 55, pour maintenir les touffes de poils dans les trous 57 correspondants, a lieu au fond desdites rainures 56, chaque trou 57 se situant au droit d'une rainure 56.

Les touffes de poils peuvent être implantées sur le support en les introduisant dans les trous correspondants par des côtés opposés, comme illustré sur la figure 13.

Sur cette figure, on a représenté un support 60 comportant une pluralité de trous 61, ces derniers recevant des touffes de poils introduites alternativement par les côtés supérieur et inférieur.

On a représenté sur les figures 14 à 19 différents applicateurs conformes à des exemples de mise en oeuvre de l'invention.

La figure 14 représente à échelle agrandie l'applicateur 10 de la figure 1.

On remarquera que cet applicateur 10 comporte, outre le support 20, des parties avant 28 et arrière 29 profilées pour faciliter son passage à travers l'organe d'essorage 5.

On remarquera sur la figure 14 que l'écartement entre les trous dans lesquels sont implantées les touffes de poils 22 est choisi de manière à ce que ces dernières se rejoignent sensiblement à leurs extrémités.

Les traces 26 du matriçage sont apparentes sur la figure 14. Dans l'exemple de la figure 14, les extrémités des poils 22, lorsque l'applicateur 10 est observé de côté, sont sensiblement alignées selon une ligne droite qui passe sensiblement par les bords inférieurs 28a et 29a des parties avant 28 et arrière 29.

Bien entendu, on peut usiner les poils après implantation sur le support pour obtenir des profils déterminés, comme illustré sur les figures 15 à 17.

On a représenté sur la figure 15 un applicateur 70 comprenant un support 20 et des parties avant 28 et arrière 29 à l'instar de l'applicateur 10 décrit précédemment, et des touffes de poils meulées de manière à ce que les extrémités des poils définissent, lorsque l'applicateur 70 est observé de côté, une ligne 71 concave vers l'extérieur, dont la courbure est par exemple adaptée à suivre le contour de la paupière.

On a représenté sur la figure 16 un applicateur 80 qui diffère des applicateurs 10 et 70 précédemment décrits par le fait que les poils sont usinés après leur implantation sur le support 20 de manière à ce que leurs extrémités se situent, lorsque l'applicateur 80 est observé de côté, selon une ligne 81 en dents de scie, afin de procurer un effet de peignage supplémentaire des cils.

Pour illustrer le fait que les boucles 23 issues de la mise en place des touffes de poils sur le support peuvent être rasées ou non, on les a représentées non rasées sur l'applicateur de la figure 16.

Ces boucles 23 peuvent servir à constituer des réserves de produit.

On a représenté sur la figure 17 un applicateur 90 comprenant un support 91 constitué par une simple portion de tige, de section aplatie ou non, dont l'extrémité avant 92 est effilée de manière à faciliter l'introduction dans le récipient contenant le produit.

Des touffes de poils sont implantées sur le support 91.

Les poils sont usinés d'un côté du support 91 de manière à ce que leurs extrémités se situent le long d'une ligne 93 convexe vers l'extérieur lorsque l'applicateur 90 est observé de côté.

Du côté opposé du support 91, les boucles sont rasées partiellement de manière à former des touffes de poils.

Celles-ci peuvent être, comme représenté, meulées de manière à ce que leurs extrémités se situent, lorsque l'applicateur 90 est observé de côté, le long d'une ligne 94 légèrement concave vers l'extérieur.

Bien entendu, on pourrait donner aux applicateurs d'autres profils encore, sans sortir du cadre de la présente invention, selon les effets de maquillage recherchés.

Le support peut présenter des reliefs et/ou des aspérités et/ou des dents destinés à produire des effets de maquillage supplémentaires, faciliter le peignage et/ou le lissage du produit sur les cils pour les allonger et/ou les recourber et/ou constituer des réserves de produit facilitant l'application du produit et augmentant l'autonomie de l'applicateur.

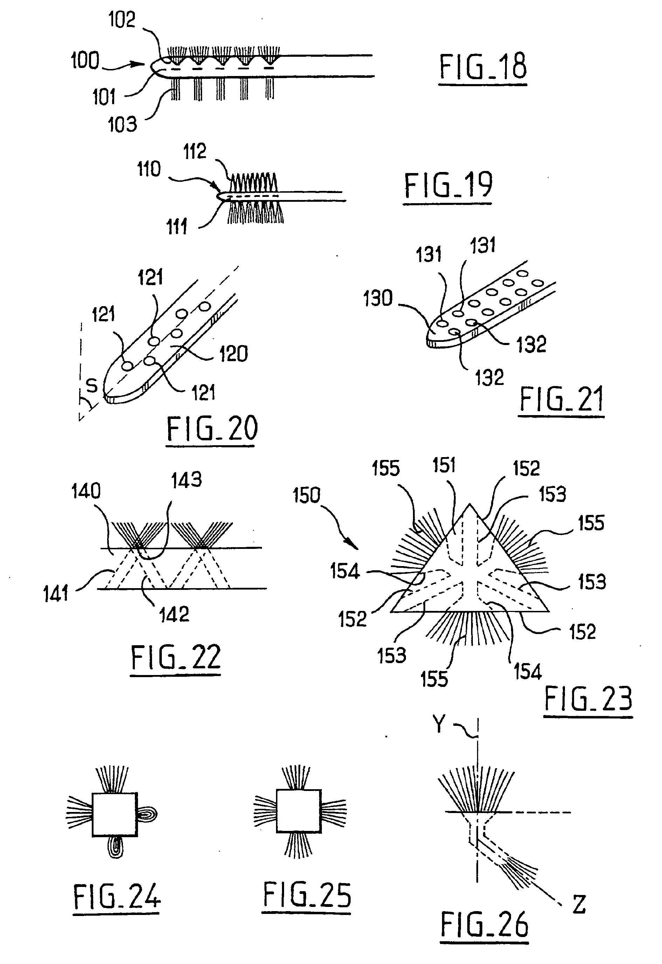

A titre d'exemple, on a représenté sur la figure 18 un applicateur 100 comprenant un support 101 dont un côté forme des dents de scie 102.

Au fond de chacune des gorges formées entre les dents du support débouche un trou traversant contenant une touffe de poils, cette dernière pouvant prendre une configuration en éventail grâce au profil en V de ladite gorge.

Les trous dans lesquels sont insérées les touffes de poils présentent une section constante du côté opposé aux dents de scie 102, afin de former des faisceaux 103 de poils faiblement divergents.

On a représenté sur la figure 19 un applicateur 110 dont le support 111 comporte des trous dans lesquels sont fixées des touffes de poils, à l'instar des exemples de réalisation décrits précédemment.

Les touffes de poils s'étendent hors du support 111 d'un côté de celui-ci.

L'applicateur comporte, du côté opposé, une ou plusieurs rangées de dents 112 réalisées d'un seul tenant avec le support 111 et destinées à peigner les cils par exemple.

Le support 111 peut comporter par exemple deux rangées de dents 112, décalées de sorte que les dents 112 soient disposées en quinconce, à bases non jointives, les trous dans lesquels sont implantées les touffes de poils étant par exemple disposés selon une ligne s'étendant entre les deux rangées de dents 112.

Les touffes de poils peuvent être implantées dans des trous alignés ou non, et le support peut comporter une ou plusieurs rangées de trous d'axes parallèles ou non.

A titre d'exemple, on a représenté sur la figure 20 un support 120, en forme générale de palette, allongé selon un axe longitudinal, traversé dans le sens de son épaisseur par une succession de trous 121 disposés en quinconce, alternativement de part et d'autre d'une surface géométrique de séparation S qui est ici un plan médian de symétrie pour le support.

Le fait de disposer les trous 121 en quinconce, avec des fraisures à leurs extrémités, permet de former des gorges en V entre des poils implantés dans deux trous consécutifs et se chevauchant lorsque l'applicateur est observé de côté, de telles gorges en V permettant d'étaler le produit sur les cils.

L'applicateur peut également comporter deux rangées parallèles ou plus de trous non décalés, comme illustré sur la figure 21.

Sur cette figure, on a représenté un support 130 comportant deux rangées de trous 131 et 132, non décalés dans le sens longitudinal.

On a représenté sur la figure 22 un support 140 traversé par des groupes de trous comprenant chacun deux trous 141 et 142 d'axes non parallèles, débouchant d'un côté du support 140 par un même orifice 143.

Les trous 141 et 142 permettent d'implanter deux touffes de poils de manière à ce que ces dernières forment un V en s'étendant hors du support, lorsque l'applicateur est observé de côté.

Dans une variante non illustrée, le support comporte des trous analogues aux trous 141 et 142, mais ne débouchant pas par un même orifice.

Dans les exemples qui viennent d'être décrits, les axes des trous recevant des touffes de poils sont parallèles au plan des figures 14 à 19, mais les trous peuvent avoir des orientations différentes.

Le support recevant les touffes de poils peut présenter une section transversale quelconque, circulaire, elliptique, polygonale ou autre, constante ou non dans le sens longitudinal.

A titre d'exemple, on a représenté sur la figure 23 un applicateur 150 constituant une brosse, comprenant un support allongé 151 de section transversale triangulaire, définissant trois faces 152 disposées comme les côtés d'un triangle isocèle.

Le support 151 est traversé par des trous transversaux 153 qui se croisent au centre du support 151 et qui s'étendent comme les hauteurs du triangle isocèle précité.

Ces trous 153 débouchent sur les faces 152 par des fraisures 154.

Des touffes de poils 155 sont insérées dans les trous 153, le maintien des poils en position étant obtenu en tout ou partie grâce au croisement des poils dans la région centrale du support 151.

On peut réaliser, comme illustré sur les figures 24 et 25, le support recevant les touffes de poils avec une section autre que triangulaire, par exemple une section carrée.

Les trous dans lesquels sont implantés les poils peuvent être sécants ou non, le croisement des poils participant avantageusement à leur maintien lorsque les trous sont sécants.

Les boucles issues de la mise en place des touffes de poils et s'étendant hors du support peuvent être rasées ou non.

A titre d'exemple, on a conservé les boucles sur la figure 24 sur deux faces de l'applicateur, tandis que sur la figure 25 les boucles ont été rasées, de sorte que l'applicateur comporte sur ses quatre faces des touffes de poils sensiblement identiques.

On peut réaliser, à travers le support, des trous non rectilignes, comportant des portions s'étendant selon des axes Y et Z formant un angle aigu non nul entre eux, comme illustré sur la figure 26.

Le support dans lequel sont implantées les touffes de poils peut présenter une forme incurvée dans un plan perpendiculaire à l'axe des trous, comme illustré sur la figure 27, ou une forme incurvée autour d'un axe perpendiculaire à l'axe des trous, comme illustré sur la figure 28.

Dans le cas de la figure 28, les poils s'étendent du côté d'une face 171 de l'applicateur, convexe vers l'extérieur, faisant avec l'axe X un angle croissant au fur et à mesure que l'on s'éloigne de la tige de l'applicateur.

Le support dans lequel sont implantés les poils peut être réalisé d'un seul tenant par moulage par injection de matière thermoplastique ou d'un alliage métallique ou par emboutissage ou usinage.

Le support peut également présenter une structure composite, comme illustré sur la figure 29, avec une âme 180 prise en sandwich entre des parties supérieure 181 et inférieure 182 réalisées dans des matériaux différents de l'âme.

L'âme 180 peut ainsi être dans un métal ductile par exemple, tandis que les parties supérieure 181 et inférieure 182 sont réalisées en matière plastique.

Les trous peuvent être réalisés par moulage du support ou par perçage de ce dernier.

Les trous peuvent également communiquer, comme illustré sur la figure 30.

Sur cette figure, on a représenté un applicateur 190 qui comporte une série de trous 191 communiquant entre eux par une partie ajourée du support, les trous étant formés entre deux bords ondulés d'une région centrale ajourée du support.

Bien entendu, l'invention n'est pas limitée aux exemples de réalisation qui viennent d'être décrits.

On peut notamment réaliser le support avec d'autres formes encore.

Les touffes de poils peuvent être assujetties au support par d'autres moyens que le matriçage de celui-ci, avec ou sans éléments rapportés, par exemple par fusion locale de matière ou à l'aide de colle.

Les trous peuvent être de section transversale circulaire ou polygonale ou autre, en une certaine position de leur longueur.

Les poils pourront recevoir un traitement, outre le meulage précédemment cité, de cardage, fusion locale ou surinjection.

A titre d'exemple, on a représenté sur la figure 32 l'extrémité d'un poil ayant subi un cardage.

On peut utiliser des poils présentant des rainures, comme illustré sur la figure 33.

Les trous recevant les touffes de poils peuvent, dans une variante non illustrée, être excentrés sur le support.

## Revendications

1. Applicateur pour l'application d'un produit sur les fibres kératiniques, notamment les cils ou les sourcils, comportant un support (20 ; 30 ; 40 ; 91 ; 101 ; 111 ; 120 ; 130 ; 140 ; 151 ; 180, 181, 182 ; 190) et des poils assujettis à ce support pour l'application du produit, **caractérisé par le fait que** le support est non torsadé et comporte au moins un trou traversant (21) de section transversale non constante dans lequel est maintenue une touffe de poils (22).

2. Applicateur selon la revendication 1, **caractérisé par le fait que** ledit au moins un trou traversant (21) a deux extrémités débouchant sur des faces extérieures du support.

3. Applicateur selon la revendication 1 ou 2, **caractérisé par le fait que** le support comporte une pluralité de trous traversants (21) recevant chacun une touffe de poils (22).

4. Applicateur selon l'une des trois revendications précédentes, **caractérisé par le fait qu'**une touffe de poils (22) correspondant à un trou donné est maintenue dans ce dernier par une déformation du trou après insertion des poils, par fluage de la matière du support.

5. Applicateur selon la revendication précédente, **caractérisé par le fait que** ladite déformation est obtenue par matriçage, agrafage, soudure ou bouterolage du support (20; 30; 40; 91; 101; 111; 120; 130; 140; 151; 180; 181; 182; 190), de préférence par matriçage.

6. Applicateur selon la revendication 4 ou 5, **caractérisé par le fait que** les poils d'une touffe sont maintenus dans le trou correspondant du support par des moyens de fixation (53) orientés perpendiculairement à leur axe.

7. Applicateur selon l'une quelconque des revendications précédentes, **caractérisé par le fait qu'**il comporte au moins un trou borgne (52) associé à un trou traversant (21) et perpendiculaire à ce dernier.

8. Applicateur selon l'une quelconque des revendications précédentes, **caractérisé par le fait que** le ou les trous traversants (21) sont de section transversale carrée, oblongue ou non circulaire à une certaine position de leur longueur.

9. Applicateur selon l'une quelconque des revendications précédentes, **caractérisé par le fait que** tout ou partie des trous comporte une fraisure (42) à l'une et/ou l'autre de leurs extrémités.

10. Applicateur selon l'une quelconque des revendications précédentes, **caractérisé par le fait que** le support comporte au moins une rangée de trous (21).

11. Applicateur selon l'une quelconque des revendications précédentes, **caractérisé par le fait que** le support comporte des trous (121) disposés en quinconce.

12. Applicateur selon l'une quelconque des revendications précédentes, **caractérisé par le fait que** le support comporte des trous (141, 142 ; 153 ; 191) communicants.

13. Applicateur selon la revendication précédente, **caractérisé par le fait que** le support comporte des trous (141, 142 ; 153) qui se croisent.

14. Applicateur selon l'une quelconque des revendications précédentes, **caractérisé par le fait que** le support comporte des trous non rectilignes.

15. Applicateur selon l'une quelconque des revendications précédentes, **caractérisé par le fait que** le support comporte des trous d'axes non parallèles.

16. Applicateur selon l'une quelconque des revendications précédentes, **caractérisé par le fait que** le support présente une forme aplatie.

17. Applicateur selon l'une quelconque des revendications précédentes, **caractérisé par le fait que** le support présente une forme allongée et une section transversale polygonale.

18. Applicateur selon l'une quelconque des revendications précédentes, **caractérisé par le fait que** le support présente une forme allongée et est réalisé avec des dents (112), rainures ou autres reliefs ou aspérités, permettant de peigner ou lisser les fibres kératiniques ou de constituer des réserves de produit, notamment des rainures (56) ou autres reliefs ou aspérités orientés transversalement à l'axe longitudinal du support.

19. Applicateur selon l'une quelconque des revendications précédentes, **caractérisé par le fait que** le support est réalisé d'un seul tenant.

20. Applicateur selon la revendication 19, **caractérisé par le fait que** ledit support est non creux.

21. Applicateur selon la revendication précédente, **caractérisé par le fait que** le support est réalisé d'un seul tenant avec une tige (11).

22. Applicateur selon la revendication 21, **caractérisé par le fait que** la tige (11) est non creuse.

23. Applicateur selon l'une quelconque des revendications 1 à 18, **caractérisé par le fait que** le support (180, 181, 182) présente une structure composite, notamment une structure sandwich.

24. Applicateur selon l'une quelconque des revendications précédentes, **caractérisé par le fait que** tout ou partie des poils présentent des rainures et/ou des plis et/ou des fourches ou des têtes arrondies.

25. Applicateur selon l'une quelconque des revendications précédentes, **caractérisé par le fait que** tout ou partie des poils sont plats.

26. Applicateur selon l'une quelconque des revendications précédentes, **caractérisé par le fait que** tout ou partie des poils forment des boucles (23) d'un côté des trous correspondants du support.

27. Applicateur selon l'une quelconque des revendications précédentes, **caractérisé par le fait que** tout ou partie des poils sont rasés d'un côté des trous correspondants du support.

28. Applicateur selon l'une quelconque des revendications précédentes, **caractérisé par le fait qu'**il comporte au moins un trou avec une touffe de poils dépassant de chaque côté du trou avec des hauteurs identiques ou différentes.

29. Applicateur selon l'une quelconque des revendications précédentes, **caractérisé par le fait que** les poils forment une brosse ayant un profil déterminé, notamment concave ou convexe, ou en dents de scie.

30. Applicateur selon l'une quelconque des revendications 1 à 29, **caractérisé par le fait qu'**au sein de chaque trou, les poils présentent des diamètres, natures et/ou sections différentes.

31. Applicateur selon l'une quelconque des revendications 1 à 30, **caractérisé par le fait qu'**une touffe comporte des poils de diamètre(s), nature(s) et/ou section(s) différente(s) de celui ou ceux des poils d'une autre touffe.

32. Dispositif pour le conditionnement et l'application d'un produit sur les cils ou les sourcils, comprenant un applicateur tel que défini dans l'une quelconque des revendications précédentes, un récipient (2) pour contenir une réserve de produit (P), et un organe d'essorage (5 ; 5') permettant d'essorer applicateur à sa sortie du récipient, notamment un organe d'essorage en mousse ou en élastomère, la tige comportant de préférence un rétreint au niveau de l'organe d'essorage pour éviter de déformer ce dernier.

33. Dispositif selon la revendication précédente, **caractérisé par le fait que** le support est fixé à l'extrémité d'une tige (11) munie à l'autre extrémité d'un organe de préhension servant également de capuchon (12) de fermeture du récipient.

34. Dispositif selon l'une des deux revendications immédiatement précédentes, **caractérisé par le fait que** le support est réalisé dans une matière plus souple que celle utilisée pour fabriquer la tige (11) à laquelle est fixé le support.

35. Dispositif selon l'une quelconque des trois revendications immédiatement précédentes, **caractérisé par le fait que** tout ou partie des poils sont réalisés dans le même matériau que le support.

36. Dispositif selon l'une quelconque des quatre revendications immédiatement précédentes, **caractérisé par le fait que** les poils sont réalisés par extrusion dans une matière molle élastomère.

37. Dispositif selon l'une quelconque des cinq revendications immédiatement précédentes, **caractérisé par le fait que** les poils sont réalisés dans une matière contenant une charge permettant d'améliorer le glissement au contact des fibres kératiniques, cette charge étant choisie notamment parmi : le graphite, le polytétrafluoroéthylène et ses dérivés, les silicones et leurs dérivés, le bisulfure de molybdène.

38. Dispositif selon l'une quelconque des six revendications immédiatement précédentes, **caractérisé par le fait que** le support est réalisé dans un ou plusieurs matériaux choisis dans la liste suivante : polyéthylène, polypropylène, polystyrène, polycarbonate, polyamide, polyacétate, polyuréthane, polyester, élastomères thermoplastiques.

39. Dispositif selon l'une quelconque des sept revendications immédiatement précédentes, **caractérisé par le fait que** le nombre de poils par touffe est compris entre 2 et 250, de préférence entre 4 et 100 et de préférence encore entre 5 et 50.

40. Procédé de fabrication d'un applicateur (10) pour l'application d'un produit (P) sur les fibres kératiniques, notamment les cils ou les sourcils, ce procédé comprenant les étapes suivantes :
- réaliser un support (20) non torsadé de forme allongée comportant des trous traversants (21),
- insérer des touffes de poils (22) dans ces trous traversants,
- déformer les trous du support pour retenir chaque touffe de poils dans le trou correspondant, au moins un trou traversant étant de section transversale non constante.

41. Procédé selon la revendication précédente, **caractérisé par le fait que** les poils sont repliés en U avant d'être inséré dans les trous traversants.

42. Procédé selon la revendication 41, **caractérisé par le fait que** les poils ne sont pas pliés en leur milieu.

43. Procédé selon l'une des deux revendications immédiatement précédentes, **caractérisé par le fait que** le support (55) est déformé par matriçage (56) sur un ou deux côtés.

44. Procédé selon l'une quelconque des revendications 40 à 43, **caractérisé par le fait que** les poils sont tondus pour leur donner une forme d'ensemble donnée.

45. Procédé selon l'une quelconque des revendications 40 à 44, **caractérisé par le fait que** les extrémités libres des poils ou les boucles sont meulées.

46. Procédé selon l'une quelconque des revendications 40 à 45, **caractérisé par le fait que** les poils sont cardés pour les éclater à leurs extrémités.

47. Procédé selon l'une quelconque des revendications 40 à 43, **caractérisé par le fait que** les poils sont coupés à la longueur souhaitée préalablement à leur mise en place sur le support et ne sont plus recoupés après leur mise en place sur celui-ci.

48. Procédé selon l'une quelconque des revendications 40 à 47, **caractérisé par le fait que** le support est soudé ou fixé par déformation de matière sur une tige.

49. Procédé de fabrication d'un applicateur (10) pour l'application d'un produit (P) sur les cils ou les autres fibres kératiniques, ce procédé comprenant les étapes suivantes :
- réaliser un support (20) non torsadé comprenant des trous traversants (51) et des trous secondaires (52) ayant un axe de préférence sensiblement perpendiculaire à l'axe desdits trous traversants,
- insérer des touffes de poils (22) dans ces trous traversants,
- insérer des pions (53) dans lesdits trous secondaires de manière à retenir chaque touffe de poils dans le trou traversant correspondant, au moins un trou traversant étant de section transversale non constante.

## Claims

1. An applicator for applying a substance to hairs, in particular the eyelashes or the eyebrows, the applicator comprising a support (20; 30; 40; 91; 101; 111; 120; 130; 140; 151; 180, 181, 182; 190) and bristles secured to said support to apply the substance, the applicator being **characterized by** the fact that the support is not twisted and has at least one through hole (21) of non-constant cross-section in which a tuft of bristles (22) is held.

2. An applicator according to claim 1, **characterized by** the fact that said at least one through hole (21) comprises two ends opening out on outer faces of the support.

3. An applicator according to claim 1 or 2, **characterized by** the fact that the support has a plurality of through holes (21), each receiving a respective tuft of bristles (22).

4. An applicator according to either one of the three preceding claims, **characterized by** the fact that a tuft of bristles (22) corresponding to a given hole is held therein by deforming the hole after the bristles have been inserted by subjecting the material of the support to plastic deformation.

5. An applicator according to the preceding claim, **characterized by** the fact that said deformation is obtained by forming, seaming, heat-sealing, or stamping the support (20; 30; 40; 91; 101; 111; 120; 130; 140; 151; 180; 181; 182; 190), and preferably by forming.

6. An applicator according to claim 4 or claim 5, **characterized by** the fact that the bristles of a tuft are held in the corresponding hole of the support by fastening means (53) extending perpendicularly to their axis.

7. An applicator according to any preceding claim, **characterized by** the fact that it includes at least one blind hole (52) associated with a through hole (21) and perpendicular thereto.

8. An applicator according to any preceding claim, **characterized by** the fact that the through hole(s) (21) is/are of square, oblong, or non-circular cross-section.

9. An applicator according to any preceding claim, **characterized by** the fact that all or some of the holes include a countersink (42) at one and/or both ends.

10. An applicator according to any preceding claim, **characterized by** the fact that the support has at least one row of holes (21).

11. An applicator according to any preceding claim, **characterized by** the fact that the support has holes (121) disposed in a staggered configuration.

12. An applicator according to any preceding claim, **characterized by** the fact that the support has intercommunicating holes (141, 142; 153; 191).

13. An applicator according to the preceding claim, **characterized by** the fact that it has holes (141, 142; 153) that cross.

14. An applicator according to any preceding claim, **characterized by** the fact that the support includes non-rectilinear holes.

15. An applicator according to any preceding claim, **characterized by** the fact that the support includes holes on non-parallel axis.

16. An applicator according to any preceding claim, **characterized by** the fact that the support has a flat shape.

17. An applicator according to any preceding claim, **characterized by** the fact that the support is elongate in shape and of polygonal cross-section.

18. An applicator according to any preceding claim, **characterized by** the fact that the support is elongate in shape and is made with teeth (112), notches, or other portions in relief or roughnesses enabling hairs to be combed or smoothed, or serving to constitute reserves of substance, in particular notches (56) or other portions in relief or roughnesses that extend transversely to the longitudinal axis of the support.

19. An applicator according to any preceding claim, **characterized by** the fact that the support is made as a single piece.

20. An applicator according to claims 19, **characterized by** the fact that said support is non-hollow.

21. An applicator according to the preceding claim, **characterized by** the fact that the support is made integrally with a stalk (11).

22. An applicator according to claim 21, **characterized by** the fact that the stalk (11) is non-hollow.

23. An applicator according to any one of claims 1 to 18, **characterized by** the fact that the support (180, 181, 182) is of composite structure, and in particular of sandwich structure.

24. An applicator according to any preceding claim, **characterized by** the fact that all or some of the bristles have grooves and/or folds and/or forks or rounded heads.

25. An applicator according to any preceding claim, **characterized by** the fact that some or all of the bristles are flat.

26. An applicator according to any preceding claim, **characterized by** the fact that some or all of the bristles form loops (23) at one end of each corresponding hole in the support.

27. An applicator according to any preceding claim, **characterized by** the fact that all or some of the bristles are cropped at one end of the corresponding holes of the support.

28. An applicator according to any preceding claim, **characterized by** the fact that it includes at least one hole with a tuft of bristles projecting from each end of the hole to respective heights that are identical or different.

29. An applicator according to any preceding claim, **characterized by** the fact that the bristles form a brush of determined profile, in particular concave or convex or saw-tooth.

30. An applicator according to any one of claims 1 to 29, **characterized by** the fact that within each hole, the bristles are of different diameters, natures, and/or sections.

31. An applicator according to any one of claims 1 to 30, **characterized by** the fact that a tuft has bristles of diameter(s), nature(s), and/or section(s) different from those of the bristles of another tuft.

32. A device for packaging and applying a substance to the eyelashes or the eyebrows, the device comprising an applicator as defined in any preceding claim, a receptacle (2) for containing a supply of substance (P), and a wiper member (5; 5') enabling the applicator to be wiped as it leaves the receptacle, in particular a foam or elastomer wiper member, the stalk preferably having a narrow region level with the wiper member so as to avoid deforming it.

33. A device according to the preceding claim, **characterized by** the fact that the support is fixed to the end of a stalk (11) provided at the other end with a handle member that also serves as a cap (12) for closing the receptacle.

34. A device according to either one of the two immediately preceding claims, **characterized by** the fact that the support is made of a material that is more flexible than the material used for making the stalk (11) to which the support is fixed.

35. A device according to any preceding claim, **characterized by** the fact that all or some of the bristles are made out of the same material as the support.

36. A device according to any preceding claim, **characterized by** the fact that the bristles are made by extruding a soft elastomer material.

37. A device according to any preceding claim, **characterized by** the fact that the bristles are made of a material containing a filler for improving sliding in contact with hairs, said filler being selected in particular from: graphite, polytetrafluoroethylene and derivatives thereof, silicones and derivatives thereof, molybdenum disulfide.

38. A device according to any preceding claim, **characterized by** the fact that the support is made of one or more materials selected from the following list: polyethylene, polypropylene, polystyrene, polycarbonate, polyamide, polyacetate, polyurethane, polyester, and thermoplastic elastomers.

39. A device according to any preceding claim, **characterized by** the fact that the number of bristles per tuft lies in the range 2 to 250, preferably in the range 4 to 100, and more preferably in the range 5 to 50.

40. A method of manufacturing an applicator (10) for applying a substance (P) to hairs, in particular the eyelashes or the eyebrows, the method comprising the following steps:
· making a non-twisted support (20) of elongate shape having through holes (21);
· inserting tufts of bristles (22) in the through holes; and
· deforming the holes of the support so as to retain each tuft of bristles in the corresponding hole, at least one through hole being of non-constant cross-section.

41. A method according to the preceding claim, **characterized by** the fact that the bristles are folded into a U-shape prior to being inserted in the through holes.

42. A method according to claim 41, **characterized by** the fact that the folding of the bristles is not in the middle.

43. A method according to either one of the two immediately preceding claims, **characterized by** the fact that the support (55) is deformed by being formed (56) on one or both sides.

44. A method according to any one of claims 40 to 43, **characterized by** the fact that the bristles are sheared so as to give them a particular overall shape.

45. A method according to any one of claims 40 to 44, **characterized by** the fact that the free ends of the bristles or the loops are machined.

46. A method according to any one of claims 40 to 45, **characterized by** the fact that the bristles are carded so as to burst their ends.

47. A method according to any one of claims 40 to 43, **characterized by** the fact that the bristles are cut to a desired length prior to being put into place in the support, and are not cut again after they have been put into place in the support.

48. A method according to any one of claims 40 to 47, **characterized by** the fact that the support is heat-sealed or fixed by deforming the material of the stalk.

49. A method of manufacturing an applicator (10) for applying a substance (P) to hairs or others keratinous fibers, the method comprising the following steps:
- making a non-twisted support (20),
- comprising through holes (51) and secondary holes (52) having an axis preferably substantially perpendicular to the axis of said through holes,
- inserting tufts of bristles (22) in said through holes,
- inserting pegs (53) in said secondary holes in such a manner as to retain each tuft of bristles in the corresponding through hole, at least one through hole having a non-constant cross-section.

## Patentansprüche

1. Auftragorgan zum Auftragen eines Produkts auf die Keratinfasern, insbesondere die Wimpern oder die Augenbrauen, umfassend einen Träger (20; 30; 40; 91, 101, 111, 120; 130; 140; 151; 180, 181, 182; 190) und an diesem Träger angebrachte Haare zum Auftragen von Produkt, **dadurch gekennzeichnet, dass** der Träger nicht verdrillt ist und mindestens ein durchgehendes Loch (21) mit einem nicht konstanten Querschnitt umfasst, in dem ein Haarbüschel (22) gehalten ist.

2. Auftragorgan nach Anspruch 1, **dadurch gekennzeichnet, dass** das mindestens eine durchgehende Loch (21) zwei Enden hat, die auf Außenseiten des Trägers ausmünden.

3. Auftragorgan nach Anspruch 1 oder 2, **dadurch gekennzeichnet, dass** der Träger eine Vielzahl von durchgehenden Löchern (21) umfasst, die jeweils ein Haarbüschel (22) aufnehmen.

4. Auftragorgan nach einem der drei vorhergehenden Ansprüche, **dadurch gekennzeichnet, dass** ein einem gegebenen Loch entsprechendes Haarbüschel (22) in diesem durch eine Verformung des Lochs durch Fließen des Werkstoffs des Trägers nach Einführen der Haare gehalten ist.

5. Auftragorgan nach dem vorhergehenden Anspruch, **dadurch gekennzeichnet, dass** die Verformung durch Prägen, Verklammern, Schweißen oder Gesenkformen des Trägers (20; 30; 40; 91; 101; 111; 120; 130; 140; 151; 180; 181; 182; 190), vorzugsweise durch Prägen, erhalten wird.

6. Auftragorgan nach Anspruch 4 oder 5, **dadurch gekennzeichnet, dass** die Haare eines Büschels in dem entsprechenden Loch des Trägers durch Befestigungsmittel (53) gehalten sind, die senkrecht zu ihrer Achse gerichtet sind.

7. Auftragorgan nach einem der vorhergehenden Ansprüche, **dadurch gekennzeichnet, dass** es mindestens ein Sackloch (52) umfasst, das einem durchgehenden Loch (21) zugeordnet ist und zu diesem senkrecht ist.

8. Auftragorgan nach einem der vorhergehenden Ansprüche, **dadurch gekennzeichnet, dass** das oder die durchgehenden Löcher (21) an einer gewissen Position ihrer Länge einen quadratischen, langgestreckten oder nicht kreisförmigen Querschnitt haben.

9. Auftragorgan nach einem der vorhergehenden Ansprüche, **dadurch gekennzeichnet, dass** alle Löcher oder ein Teil von ihnen an dem einen und/oder dem anderen ihrer Enden eine Fräsung (42) aufweisen.

10. Auftragorgan nach einem der vorhergehenden Ansprüche, **dadurch gekennzeichnet, dass** der Träger mindestens eine Reihe von Löchern (21) umfasst.

11. Auftragorgan nach einem der vorhergehenden Ansprüche, **dadurch gekennzeichnet, dass** der Träger versetzt angeordnete Löcher (121) umfasst.

12. Auftragorgan nach einem der vorhergehenden Ansprüche, **dadurch gekennzeichnet, dass** der Träger kommunizierende Löcher (141, 142; 153; 191) umfasst.

13. Auftragorgan nach dem vorhergehenden Anspruch, **dadurch gekennzeichnet, dass** der Träger Löcher (141, 142; 153) umfasst, die sich kreuzen.

14. Auftragorgan nach einem der vorhergehenden Ansprüche, **dadurch gekennzeichnet, dass** der Träger nicht geradlinige Löcher umfasst.

15. Auftragorgan nach einem der vorhergehenden Ansprüche, **dadurch gekennzeichnet, dass** der Träger Löcher mit nicht parallelen Achsen umfasst.

16. Auftragorgan nach einem der vorhergehenden Ansprüche, **dadurch gekennzeichnet, dass** der Träger eine abgeflachte Form besitzt.

17. Auftragorgan nach einem der vorhergehenden Ansprüche, **dadurch gekennzeichnet, dass** der Träger eine langgestreckte Form und einen polygonalen Querschnitt besitzt.

18. Auftragorgan nach einem der vorhergehenden Ansprüche, **dadurch gekennzeichnet, dass** der Träger eine langgestreckte Form besitzt und mit Zähnen (112), Nuten oder anderen Reliefs oder Unebenheiten ausgeführt ist, die es gestatten, die Keratinfasern zu kämmen oder zu glätten oder Produktreserven zu bilden, insbesondere Nuten (56) oder andere Reliefs oder Unebenheiten, die quer zur Längsachse des Trägers gerichtet sind.

19. Auftragorgan nach einem der vorhergehenden Ansprüche, **dadurch gekennzeichnet, dass** der Träger einstückig ausgeführt ist.

20. Auftragorgan nach Anspruch 19, **dadurch gekennzeichnet, dass** der Träger nicht hohl ist.

21. Auftragorgan nach dem vorhergehenden Anspruch, **dadurch gekennzeichnet, dass** der Träger mit einer Stange (11) einstückig ausgeführt ist.

22. Auftragorgan nach Anspruch 21, **dadurch gekennzeichnet, dass** die Stange (11) nicht hohl ist.

23. Auftragorgan nach einem der Ansprüche 1 bis 18, **dadurch gekennzeichnet, dass** der Träger (180, 181, 182) eine Verbundstruktur, insbesondere eine Sandwichstruktur, besitzt.

24. Auftragorgan nach einem der vorhergehenden Ansprüche, **dadurch gekennzeichnet, dass** alle Haare oder ein Teil davon Nuten und/oder Falze und/oder Gabeln oder abgerundete Köpfe aufweisen.

25. Auftragorgan nach einem der vorhergehenden Ansprüche, **dadurch gekennzeichnet, dass** alle Haare oder ein Teil davon flach sind.

26. Auftragorgan nach einem der vorhergehenden Ansprüche, **dadurch gekennzeichnet, dass** alle Haare oder ein Teil davon auf einer Seite der entsprechenden Löcher des Trägers Schleifen (23) bilden.

27. Auftragorgan nach einem der vorhergehenden Ansprüche, **dadurch gekennzeichnet, dass** alle Haare oder ein Teil davon auf einer Seite der entsprechenden Löcher des Trägers geschoren sind.

28. Auftragorgan nach einem der vorhergehenden Ansprüche, **dadurch gekennzeichnet, dass** es mindestens ein Loch mit einem Haarbüschel besitzt, das auf jeder Seite des Lochs mit identischen oder verschiedenen Höhen vorsteht.

29. Auftragorgan nach einem der vorhergehenden Ansprüche, **dadurch gekennzeichnet, dass** die Haare eine Bürste bilden, die ein bestimmtes, insbesondere konkaves oder konvexes oder sägezahnförmiges Profil besitzt.

30. Auftragorgan nach einem der Ansprüche 1 bis 29, **dadurch gekennzeichnet, dass** die Haare in jedem Loch verschiedene Durchmesser, Beschaffenheiten und/oder Querschnitte besitzen.

31. Auftragorgan nach einem der Ansprüche 1 bis 30, **dadurch gekennzeichnet, dass** ein Büschel Haare umfasst, deren Durchmesser, Beschaffenheit(en) und/oder Querschnitt(e) von demjenigen bzw. derjenigen oder denjenigen der Haare eines anderen Büschels verschieden sind.

32. Vorrichtung zum Verpacken und Auftragen eines Produkts auf die Wimpern oder Augenbrauen, umfassend ein Auftragorgan, wie es in einem der vorhergehenden Ansprüche definiert ist, einen Behälter (2) zur Aufnahme eines Produktvorrats (P) und ein Abstreiforgan (5; 5'), das das Abstreifen des Auftragorgans bei seinem Austritt aus dem Behälter gestattet, insbesondere ein Abstreiforgan aus Schaumstoff oder aus Elastomer, wobei die Stange vorzugsweise auf Höhe des Abstreiforgans eine Verjüngung aufweist, um dessen Verformung zu vermeiden.

33. Vorrichtung nach dem vorhergehenden Anspruch, **dadurch gekennzeichnet, dass** der Träger an dem Ende einer Stange (11) befestigt ist, die an dem anderen Ende mit einem Greiforgan versehen ist, das auch als Kappe (12) zum Verschließen des Behälters dient.

34. Vorrichtung nach einem der beiden unmittelbar vorhergehenden Ansprüche, **dadurch gekennzeichnet, dass** der Träger aus einem Werkstoff hergestellt ist, der weicher als derjenige ist, der zur Herstellung der Stange (11) verwendet wird, an der der Träger befestigt ist.

35. Vorrichtung nach einem der drei unmittelbar vorhergehenden Ansprüche, **dadurch gekennzeichnet, dass** alle Haare oder ein Teil von ihnen aus demselben Werkstoff wie der Träger hergestellt sind.

36. Vorrichtung nach einem der vier unmittelbar vorhergehenden Ansprüche, **dadurch gekennzeichnet, dass** die Haare durch Extrusion aus einem weichen Elastomerwerkstoff hergestellt sind.

37. Vorrichtung nach einem der fünf unmittelbar vorhergehenden Ansprüche, **dadurch gekennzeichnet, dass** die Haare aus einem Werkstoff hergestellt sind, der eine Charge enthält, die die Verbesserung des Gleitens im Kontakt mit den Keratinfasern gestattet, wobei diese Charge insbesondere ausgewählt ist aus: Graphit, Polytetrafluorethylen und seine Derivate, Silikone und ihre Derivate, Molybdänbisulfid.

38. Vorrichtung nach einem der sechs unmittelbar vorhergehenden Ansprüche, **dadurch gekennzeichnet, dass** der Träger aus einem oder mehreren Werkstoffen hergestellt ist, die aus der folgenden Liste ausgewählt sind: Polyethylen, Polypropylen, Polystyrol, Polycarbonat, Polyamid, Polyacetat, Polyurethan, Polyester, thermoplastische Elastomere.

39. Vorrichtung nach einem der sieben unmittelbar vorhergehenden Ansprüche, **dadurch gekennzeichnet, dass** die Anzahl von Haaren pro Büschel zwischen 2 und 250, vorzugsweise zwischen 4 und 100 und noch bevorzugter zwischen 5 und 50 beträgt.

40. Verfahren zur Herstellung eines Auftragorgans (10) zum Auftragen eines Produkts (P) auf die Keratinfasern, insbesondere die Wimpern oder Augenbrauen, wobei dieses Verfahren die folgenden Schritte umfasst:
- einen nicht verdrillten Träger (20) von langgestreckter Form herstellen, der durchgehende Löcher (21) umfasst,
- Haarbüschel (22) in diese durchgehenden Löcher einführen,
- die Löcher des Trägers verformen, um jedes Haarbüschel in dem entsprechenden Loch zurückzuhalten, wobei mindestens ein durchgehendes Loch einen nicht konstanten Querschnitt besitzt.

41. Verfahren nach dem vorhergehenden Anspruch, **dadurch gekennzeichnet, dass** die Haare U-förmig gebogen werden, bevor sie in die durchgehenden Löcher eingeführt werden.

42. Verfahren nach Anspruch 41, **dadurch gekennzeichnet, dass** die Haare in ihrer Mitte nicht umgebogen sind.

43. Verfahren nach einem der beiden unmittelbar vorhergehenden Ansprüche, **dadurch gekennzeichnet, dass** der Träger (55) durch Prägen (56) auf einer oder beiden Seiten verformt wird.

44. Verfahren nach einem der Ansprüche 40 bis 43, **dadurch gekennzeichnet, dass** die Haare geschoren werden, um ihnen eine gegebene Gesamtform zu geben.

45. Verfahren nach einem der Ansprüche 40 bis 44, **dadurch gekennzeichnet, dass** die freien Enden der Haare oder die Schleifen geschliffen werden.

46. Verfahren nach einem der Ansprüche 40 bis 45, **dadurch gekennzeichnet, dass** die Haare gekrempelt werden, um sie an ihren Enden aufzusprengen.

47. Verfahren nach einem der Ansprüche 40 bis 43, **dadurch gekennzeichnet, dass** die Haare vor ihrer Anbringung an den Träger auf die gewünschte Länge geschnitten werden und nach ihrer Anbringung an diesem nicht mehr nachgeschnitten werden.

48. Verfahren nach einem der Ansprüche 40 bis 47, **dadurch gekennzeichnet, dass** der Träger an einer Stange angeschweißt oder durch Werkstoffverformung befestigt wird.

49. Verfahren zur Herstellung eines Auftragorgans (10) zum Auftragen eines Produkts (P) auf die Wimpern oder die anderen Keratinfasern, wobei dieses Verfahren die folgenden Schritte umfasst:
- einen nicht verdrillten Träger (20) herstellen, der durchgehende Löcher (51) und zusätzliche Löcher (52) umfasst, die eine Achse haben, die vorzugsweise zur Achse der durchgehenden Löcher im Wesentlichen senkrecht ist,
- Haarbüschel (22) in diese durchgehenden Löcher einsetzen,
- Stifte (53) in diese zusätzlichen Löcher einsetzen, so dass jedes Büschel von Haaren in dem entsprechenden durchgehenden Loch zurückgehalten wird,
wobei mindestens ein durchgehendes Loch einen nicht konstanten Querschnitt besitzt.
